Europäisches Patentamt

European Patent Office

Office européen des brevets

(19)

(11) Numéro de publication : **0 366 504 B1**

## (12) FASCICULE DE BREVET EUROPEEN

(45) Date de publication du fascicule du brevet :
**02.01.92 Bulletin 92/01**

(51) Int. Cl.⁵ : **B60T 13/567**

(21) Numéro de dépôt : **89402526.1**

(22) Date de dépôt : **15.09.89**

(54) **Ensemble d'un servomoteur de freinage monté sur une paroi fixe d'un vehicule.**

(30) Priorité : **28.10.88 FR 8814119**

(43) Date de publication de la demande :
**02.05.90 Bulletin 90/18**

(45) Mention de la délivrance du brevet :
**02.01.92 Bulletin 92/01**

(84) Etats contractants désignés :
**DE ES FR GB IT**

(56) Documents cités :
**EP-A- 0 148 670**
**EP-A- 0 260 170**

(73) Titulaire : **BENDIX EUROPE Services
Techniques S.A.
126 rue de Stalingrad
F-93700 Drancy (FR)**

(72) Inventeur : **Gautier, Jean-Pierre
Bendix France S.A. 126 Rue de Stalingrad
F-93700 Drancy (FR)**
Inventeur : **Meynier, Guy
Bendix France S.A. 126 Rue de Stalingrad
F-93700 Drancy (FR)**

(74) Mandataire : **Lejet, Christian
Bendix Europe Service Techniques Service
Brevets 126 rue de Stalingrad
F-93700 Drancy (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les systèmes de freinage de véhicules, et plus particulièrement un ensemble d'un servomoteur de freinage monté sur une partie fixe d'un véhicule.

Classiquement (voir par exemple le document US-A-3358449), un servomoteur de freinage est monté sur la paroi fixe d'un véhicule séparant le compartiment moteur de l'habitacle, au moyen de boulons de montage introduits depuis le compartiment moteur du véhicule dans des orifices correspondants formés dans la paroi fixe, après quoi un écrou est vissé sur l'extrémité filetée de chaque boulon faisant saillie de l'autre côté de la paroi fixe, c'est à dire dans l'habitacle.

Les problèmes de compacité et d'encombrement des véhicules modernes rendent de plus en plus difficile l'accès à la face arrière de la paroi fixe, qui se trouve généralement déportée profondément sous le tableau de bord au voisinage de la console centrale de ce dernier et des ferrures des pédales, de sorte que la mise en place de l'écrou sur le boulon s'avère une opération longue et difficile pour l'opérateur, pouvant induire un faussage des filets de l'écrou et/ou du boulon et donc contribuer à la réalisation d'un assemblage imparfait, voire défectueux.

Pour pallier ces inconvénients, on a aussi proposé, dans le document EP-A-0260170, que l'orifice dans la paroi fixe du véhicule présente une configuration allongée, typiquement sensiblement en forme d'arc de cercle, avec une première zone d'extrémité de section agrandie, permettant le passage de l'écrou préalablement engagé sur l'extrémité filetée du boulon, se raccordant à une seconde zone d'extrémité de l'orifice de section correspondant à celle du boulon.

Avec un tel agencement l'écrou peut être pré-vissé aisément sur le boulon, avant montage in situ, après quoi le boulon, portant l'écrou pré-vissé, est engagé au travers de la première zone d'extrémité de l'orifice, le servomoteur étant ensuite soumis manuellement à un déplacement adéquat, typiquement à une rotation autour de son axe, pour amener le boulon dans la seconde zone d'extrémité de l'orifice, l'écrou étant ensuite vissé à fond sur ce dernier au moyen d'une visseuse ou d'une boulonneuse adéquate.

Bien que, selon ce document, on évite les problèmes de mise en place in situ de l'écrou sur le boulon dans les cas où l'accessibilité à la zone de montage du servomoteur dans l'habitacle est réduite, le montage du servomoteur nécessite encore non seulement des opérations manuelles, mais qui de plus doivent être effectuées dans l'habitacle. Une grande partie des inconvénients mentionnés plus haut subsiste donc.

Il a été également proposé, dans le document EP-A-0148670, de fixer sur le tablier d'un véhicule automobile séparant le compartiment moteur de l'habitacle un support de pédales également utilisé comme support pour un amplificateur pneumatique de freinage. Dans ce but, le support comporte une partie cylindrique traversant le tablier et limitée par une collerette intérieure, qui délimite un orifice circulaire. Sur cette collerette sont ménagées des encoches séparées par des portées destinées à coopérer avec autant de pattes faisant saillie radialement à l'extérieur d'une bague fixée à l'amplificateur par des goujons. Le montage de l'amplificateur sur le support s'effectue par l'engagement axial des pattes de la bague dans les encoches correspondantes de la collerette, puis par la rotation de l'amplificateur amenant les pattes en engagement avec les portées. Un joint annulaire assure l'étanchéité entre le compartiment moteur et l'habitacle.

Bien que ce document remédie à différents inconvénients mentionnés plus haut, certains subsistent encore. En effet, le servomoteur est fixé sur le support par l'intermédiaire d'une bague fixée sur sa paroi arrière. Le servomoteur étant soumis à des efforts considérables exercés par la pédale de freinage, il est nécessaire de disposer à l'intérieur du servomoteur, pour la fixation des goujons maintenant la bague, des renforts conséquents pour éviter l'arrachement de la tôle constituant la paroi arrière lors de l'actionnement de la pédale de frein. Il s'ensuit donc un accroissement proportionnel du poids du servomoteur.

D'autre part, le maintien du servomoteur, par l'engagement mutuel entre les pattes de la bague et les portées de la collerette du support, n'est obtenu que sur des zones de surfaces réduites. Il s'ensuit donc que les effort développés au niveau de ces surfaces seront considérables, et concourront donc au dimensionnement du renfort intérieur.

De plus, lors de l'engagement axial du servomoteur dans l'orifice circulaire délimité par la collerette du support, il existe un jeu important entre les parties male et femelle, de telle sorte que le positionnement exact ne peut être obtenu que par tâtonnements, ce qui interdit l'automatisation de l'installation du servomoteur par un automate programmé tel qu'un robot de montage.

La présente invention a donc pour but de prévoir un ensemble du type considéré, comportant des moyens pour monter sur une partie fixe d'un véhicule un servomoteur assemblé, de façon rapide et fiable, selon un processus entièrement automatisé, et qui assure un contact entre le servomoteur et la partie fixe sur une surface qui s'étende angulairement sur plus de 180°.

Dans ce but, l'invention, il est prévu un ensemble d'un servomoteur de freinage composé d'une demi-coquille avant et d'une demi-coquille arrière, et monté sur une partie fixe d'un véhicule au moyen de pattes disposées dans un plan perpendiculaire à l'axe du servomoteur et autour de cet axe, s'étendant radialement vers l'extérieur et coopérant avec des portées de formes et de dimensions correspondantes pour un montage par engagement axial suivi d'une rotation, un moyen élastique étant disposé entre le servomoteur et la partie fixe, le servomoteur comportant un moyeu central sur la demi-coquille arrière comprenant un moyen de valve de commande du servomoteur, caractérisé en ce que les pattes ou les portées sont formées d'une seule pièce avec le moyeu central et coopèrent respectivement avec les portées ou les pattes formées sur la partie fixe du véhicule.

D'autres caractéristiques et avantages de la présente invention ressortiront de la description suivante d'un mode de réalisation donné uniquement à titre d'exemple, en relation avec les dessins annexés sur lesquels :

— La Figure 1 est une vue partiellement en coupe d'un premier mode de réalisation d'un ensemble de servomoteur selon l'invention ;
— La Figure 2 est une vue analogue d'un deuxième mode de réalisation d'un ensemble de servomoteur selon l'invention ;
— La Figure 3 est une vue selon la flèche F de la Figure 1 de la pièce formant le fond de l'ensemble de servomoteur de la Figure 1 ;
— La Figure 4 est une coupe selon la ligne IV-IV de la Figure 3 ;
— La Figure 5 est une demi-coupe selon la ligne V-V de la Figure 4 ;
— La Figure 6 est une vue du support de l'ensemble de servomoteur de la Figure 1, dans le sens contraire à celui de la flèche F de la Figure 1 ;
— La Figure 7 est une coupe selon la ligne VII-VII de la Figure 6 ; et
— La Figure 8 est une coupe selon la ligne VIII-VIII de la Figure 7.

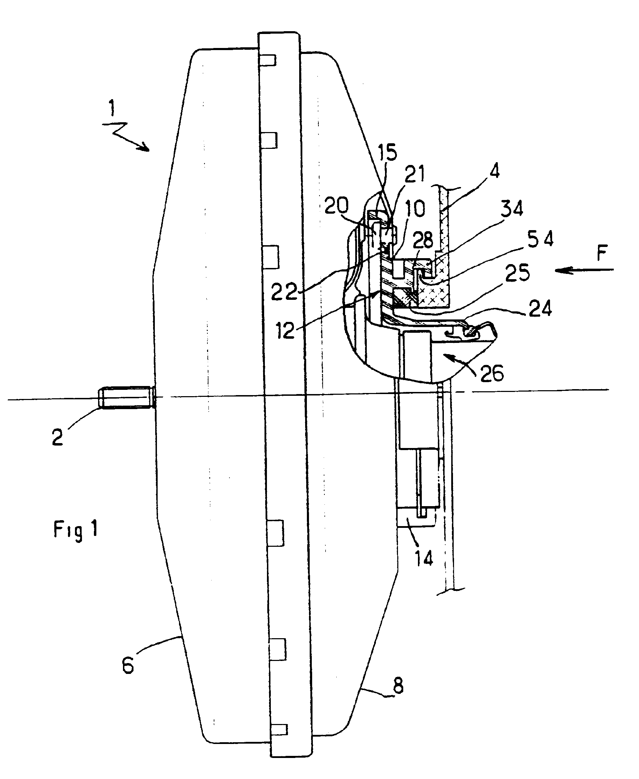

On a représenté sur la Figure 1 un montage classique d'un servomoteur de freinage du type à dépression 1, couplé à un maître-cylindre de freinage (non représenté) au moyen d'une tige d'actionnement 2, et monté en porte-à-faux sur la face antérieure d'une paroi fixe 4 d'un véhicule, typiquement la paroi dite "pare-feu" ou tablier, séparant le compartiment moteur de l'habitacle.

De façon connue, le servomoteur est constitué de deux demi-coquilles avant 6 et arrière 8, réunies de façon étanche de façon à former une enveloppe dans laquelle se déplace un moyen de piston divisant le volume intérieur de l'enveloppe en une chambre à dépression avant et une chambre de travail arrière sélectivement intercommunicantes pour fournir l'assistance au freinage requise, lors de l'actionnement de la pédale de frein (non représenté) agissant sur la tige d'actionnement du servomoteur à travers le moyeu central formé sur la demi-coquille arrière.

Classiquement, par exemple comme dans les documents précités, le servomoteur est fixé au tablier au moyen d'au moins un boulon ayant une tête solidaire de la demi-coquille arrière du servomoteur et traversant un orifice formé dans le tablier, l'assemblage s'effectuant au moyen d'un écrou vissé sur l'extrémité filetée du boulon faisant saillie à l'arrière du tablier, cet assemblage présentant les inconvénients mentionnés plus haut.

Conformément à l'invention, il est prévu de réaliser cet assemblage non plus par l'intermédiaire de la demi-coquille arrière, mais plutôt par l'intermédiaire de la pièce constituant le moyeu du servomoteur.

Sur la Figure 1, on voit que l'on a pratiqué dans la demi-coquille arrière 8 du servomoteur 1 une ouverture 10, dans laquelle est insérée, depuis l'intérieur de la demi-coquille une pièce 12 dont la tête 14 a une forme extérieure complémentaire à celle de l'ouverture 10, par exemple circulaire, et s'étend à l'extérieur vers l'arrière de la demi-coquille 8. La pièce 12 possède une partie 16 s'appliquant sur la surface interne de la demi-coquille 8, et est solidarisée à celle-ci au moyen de boulons ou de rivets 20 traversant des orifices correspondants ménagés dans la pièce 12 et dans la demi-coquille 8. Un joint d'étanchéité 22 est disposé entre la partie 16 de la pièce 12 et la demi-coquille 8.

La pièce 12 comprend d'autre part une partie cylindrique 24 s'étendant axialement vers l'arrière du servomoteur et constituant le moyeu de celui-ci, et comprenant, de façon connue, un moyen de valve de commande 26 actionné par une tige d'entrée (non représentée) s'étendant dans l'habitacle et destinée à être couplée à une pédale de freinage (non représentée).

La pièce 12 comprend enfin des moyens destinés à l'assemblage de l'ensemble de servomoteur sur le tablier du véhicule. Dans l'exemple représenté, ces moyens sont constitués par des projections 28 s'étendant axialement vers l'arrière du servomoteur, coaxialement avec la partie cylindrique 24, et disposées autour de cette partie 24.

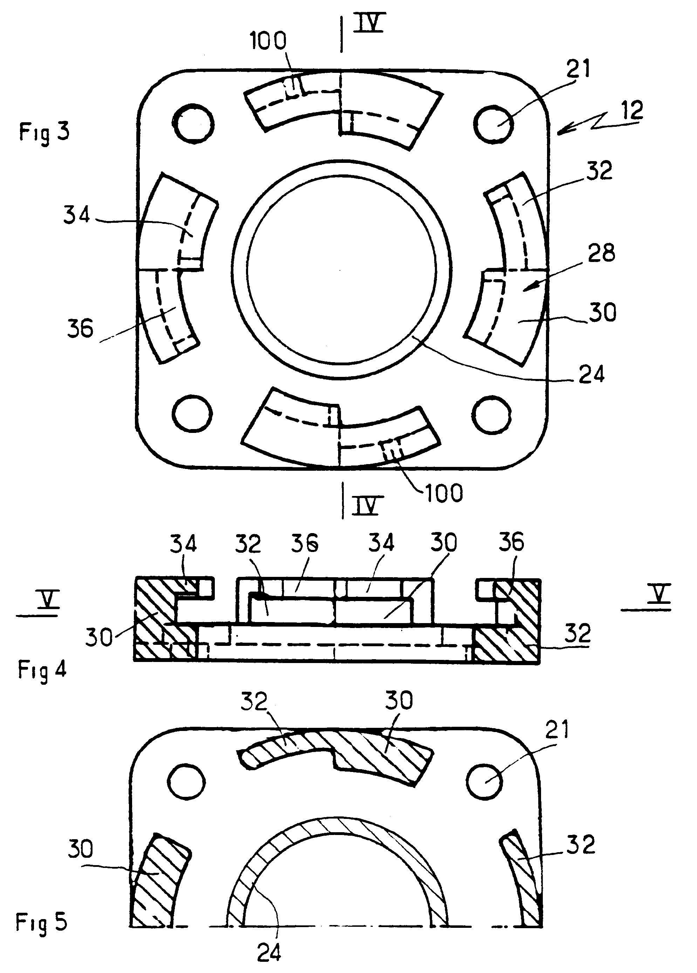

La pièce d'assemblage 12 est plus particulièrement représentée sur les Figures 3 à 5.

Sur la Figure 3 où la pièce d'assemblage est vue dans le sens de la flèche F de la Figure 1, on voit les orifices 21 pratiqués à la périphérie de la pièce 12 et destinés à recevoir les rivets de fixation sur la demi-coquille arrière du servomoteur 1, ainsi que la partie cylindrique 24 constituant le moyeu du servomoteur. Les projections axiales 28 sont constituées de portions d'un cylindre s'étendant axialement, perpendiculairement au plan de la pièce 12, et dont une moitié 30 a une épaisseur double de celle de l'autre moitié 32 de façon à ce que les circonférences extérieures des parties 30 et 32 soient raccordées sans solution de continuité, et à ce que leurs circonférences intérieures présentent un décrochement, d'une longueur radiale égale à l'épaisseur de la partie 32 la moins épaisse.

Les parties 30 et 32 des projections axiales 28 se terminent par des parties 34 et 36 respectivement s'étendant radialement vers l'intérieur d'une quantité égale, de sorte que les parties 34 et 36 présentent des circonférences externes raccordées sans solution de continuité, alors que leurs circonférences internes présentent un décrochement d'une longueur égale à celui qui existe entre les parties 30 et 32. Les parties 34 et 36 constituent ainsi des portées décalées s'étendant radialement vers l'intérieur des projections axiales 28.

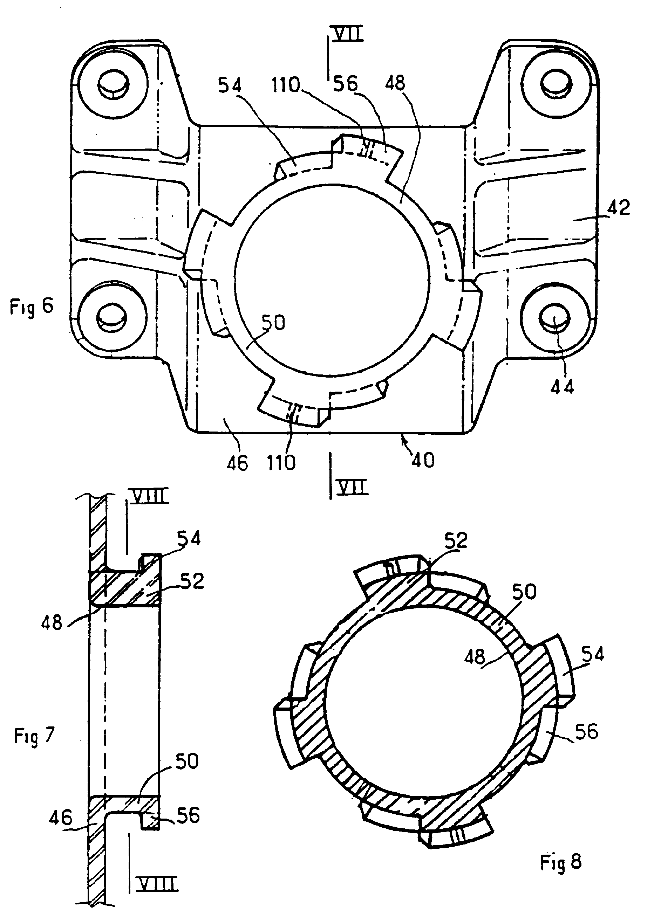

Ces portées décalées 34 et 36 sont destinées à coopérer, lors du montage du servomoteur sur une partie fixe du véhicule, avec des pattes formées sur cette dernière. Sur la Figure 1, les pattes sont formées directement sur le tablier 4 du véhicule. On peut aussi réaliser ces pattes sur une pièce intermédiaire qui sera elle-même fixée sur le tablier du véhicule. C'est ce dernier exemple qui est illustré sur la Figure 6, où l'on voit une pièce 40, comportant une partie 42 destinée à être fixée sur le tablier 4 du véhicule par l'intermédiaire de rivets ou boulons (non représentés) passant par des orifices 44 de la partie 42, et des orifices correspondants du tablier, et une partie 46, destinée à recevoir le servomoteur 1 muni de sa pièce de montage 12. Les parties 42 et 46 peuvent être situées dans le même plan, dans des plans parallèles, ou dans des plans concourants, ce choix dépendant de l'orientation du tablier, de celle qu'on veut donner au servomoteur, de l'encombrement de ce dernier, de la place disponible dans le compartiment moteur, etc...

Dans l'exemple représenté sur la Figure 6, les parties 42 et 46 sont dans des plans parallèles. Dans la partie 46 est pratiquée une ouverture circulaire 48, de diamètre supérieur à celui de la partie cylindrique 24 constituant le moyeu du servomoteur 1, de façon à ce qu'il puisse y pénétrer librement. La partie 46, ou le tablier 4 (Figures 1 et 7) comporte une partie cylindrique 50, s'étendant perpendiculairement à son plan, dont le rayon intérieur est égal au rayon de l'ouverture 48, et dont la surface extérieur comporte, régulièrement réparties, des portions 52 de rayon supérieur, d'une quantité par exemple égale à l'épaisseur de la partie 50. Sur la partie cylindrique 50, et plus particulièrement sur les portions 52 de plus grande épaisseur, sont formées des pattes 56 s'étendant radialement vers l'extérieur, sur une longueur égale à l'épaisseur de la partie cylindrique 50, et de même dimension angulaire. Adjacentes à ces pattes 56 sont formées sur la partie cylindrique 50, d'autres pattes 54, régulièrement réparties, de même dimension angulaire et de même longueur que les pattes 56, et se trouvant donc décalées par rapport à ces dernières vers l'axe de la partie cylindrique 50, d'une quantité égale, dans l'exemple représenté, à l'épaisseur de la partie cylindrique 50.

On comprendra que les pattes 54 et 56, destinées à coopérer respectivement avec les portées 34 et 36 formées sur la pièce d'assemblage 2, auront des dimensions correspondant à celles de ces portées. Ainsi, le rayon des pattes 56 sera légèrement inférieur au rayon intérieur des parties 32, le rayon des pattes 54 sera légèrement inférieur au rayon intérieur des parties 28, et le rayon intérieur des portées 34 légèrement supérieur à celui de la partie cylindrique 50. De même, les pattes 54 et 56, et les portées 34 et 36 s'étendront sur un même secteur angulaire, 30° dans l'exemple représenté.

Lors du montage du servomoteur 1 sur le tablier 4 ou sur une pièce intermédiaire 40 fixée sur le tablier 4, il suffit, après avoir disposé un joint 25 sur la pièce 12, de présenter le servomoteur assemblé de façon à ce que les pattes 54 et 56 pénètrent à l'intérieur de la pièce 12 et soient à côté des portées 34 et 36. Une pression appliquée sur le servomoteur dans le sens contraire à celui de la flèche F sur la Figure 1 comprime le joint 25, après quoi une rotation du servomoteur de 30° amène les pattes 54 et 56 au voisinage des portées 34 et 36. En relachant la pression sur le servomoteur, les pattes 54 et 56 viennent au contact des portées 34 et 36. On comprend alors que le contact entre la pièce 12 et le tablier 4 ou la pièce 40 est assuré, dans l'exemple représenté, sur huit zones de 30° chacune, soit sur 240°. On peut évidemment envisager de réaliser dans la pièce 12 des portées décalées à trois étages et des pattes correspondantes sur l'autre pièce au lieu de deux comme cela a été représenté. La mise en place du servomoteur nécessitera encore une rotation de 30°, mais le contact sera alors établi sur 270°. De même, avec des portées décalées à quatre étages, le contact sera établi sur 300°.

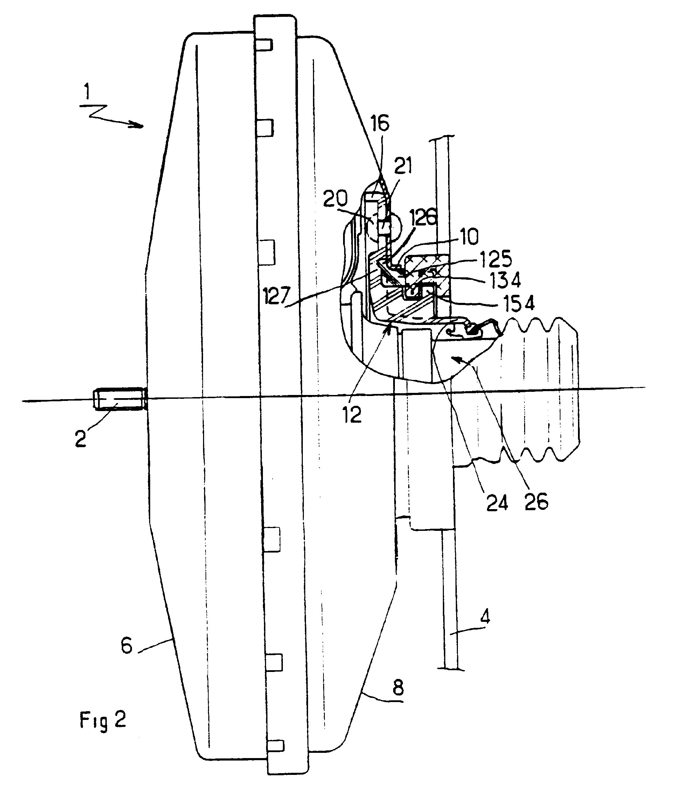

Il est bien évident que l'on pourra permuter le rôle des portées et des pattes, c'est à dire munir la pièce 12 de pattes qui s'engageront sur des portées formées sur le tablier 4 ou la pièce intermédiaire 40. C'est cette alternative qui a été représenté sur la Figure 2, où les mêmes éléments portent les mêmes références que sur la Figure 1.

Sur la Figure 2, on voit que la pièce 12 comporte des pattes 154 qui, dans ce mode de réalisation, sont portées par la partie cylindrique 24 formant le moyeu du servomoteur, donnant ainsi une construction plus compacte de la pièce 12. Les portées 134 sont alors formées sur la partie fixe du véhicule et sont de forme correspondantes, de façon à ce que le montage du servomoteur s'opère de la même façon que dans le premier mode de réalisation. Un autre avantage de ce second mode de réalisation est qu'il ne nécessite qu'un seul joint d'étanchéité 125, au lieu de deux dans le mode de réalisation de la Figure 1. Avantageusement, le joint 125 est interposé entre la pièce 12 et la demi-coquille 8 lors de l'assemblage du servomoteur, et il est maintenu entre elles par pincement d'une partie 126 du joint formant talon dans une gorge annulaire 127 de forme complémentaire prévue dans la pièce 12.

Une fois le montage effectué, le joint d'étanchéité 25 ou 125 maintient les pattes en contact avec les portées correspondantes, et immobilise ainsi en rotation le servomoteur quine pourra donc se démonter accidentellement. Si l'on désire parfaire cette immobilisation en rotation, on pourra prévoir par exemple de réaliser des perçages 100 dans les parties cylindriques 32 supportant les portées 36 (Figure 3), et des perçages 110 correspondants dans les pattes 56 (Figure 6) de façon que ces perçages soient alignés lorsque le servomoteur 1 est en position correcte. Une goupille ou clavette introduite dans les perçages 100 et 110 interdira alors tout mouvement relatif entre le servomoteur et la partie fixe du véhicule sur laquelle il est monté.

On pourra ainsi employer tout moyen d'immobilisation en rotation, comme des rampes inclinées réalisées sur les pattes et coopérant avec des surfaces inclinées correspondantes réalisées sur les portées. De même, on pourra prévoir de réaliser la demi-coquille arrière d'une seule pièce avec la pièce d'assemblage sur la partie fixe.

## Revendications

1. Ensemble d'un servomoteur de freinage (1) composé d'une demi-coquille avant (6) et d'une demi-coquille arrière (8), et monté sur une partie fixe (4, 40) d'un véhicule au moyen de pattes (54, 56, 154) disposées dans un plan perpendiculaire à l'axe du servomoteur et autour de cet axe, s'étendant radialement vers l'extérieur et coopérant avec des portées (34, 36, 134) de formes et de dimensions correspondantes pour un montage par engagement axial suivi d'une rotation, un moyen élastique (25, 125) étant disposé entre le servomoteur (1) et la partie fixe (4, 40), le servomoteur (1) comportant un moyeu central (24) sur la demi-coquille arrière (8) comprenant un moyen de valve de commande (26) du servomoteur (1), caractérisé en ce que les pattes (154) ou les portées (34, 36) sontformées d'une seule pièce avec le moyeu central (24) et coopèrent respectivement avec les portées (134) ou les pattes (54, 56) formées sur la partie fixe (4, 40) du véhicule.

2. Ensemble d'un servomoteur selon la revendication 1, caractérisé en ce que la partie fixe du véhicule est constituée du tablier séparant le compartiment moteur de l'habitacle.

3. Ensemble d'un servomoteur selon la revendication 1, caractérisé en ce que la partie fixe du véhicule est constituée par une pièce intermédiaire (40) elle-même fixée sur le tablier séparant le compartiment moteur de l'habitacle.

4. Ensemble d'un servomoteur selon l'une des revendication 1 à 3, caractérisé en ce que les portées sont constituées de portées décalées (34, 36) à au moins deux étages.

5. Ensemble d'un servomoteur selon l'une des revendications 1 à 3, caractérisé en ce que les pattes sont constituées de parties décalées (54, 56) à au moins deux étages.

6. Ensemble d'un servomoteur selon l'une des revendications 4 ou 5, caractérisé en ce que les portées (34, 36, 134) et les pattes (54, 56, 154) sont constituées d'étages décalés, chaque étage s'étendant sur un secteur angulaire de 30°.

7. Ensemble d'un servomoteur selon l'une des revendications 1 à 6, caractérisé en ce qu'il est au contact de la partie fixe du véhicule sur une surface qui s'étend angulairement sur plus de 180°.

8. Ensemble d'un servomoteur selon la revendication 7, caractérisé en ce que la surface de contact entre le servomoteur et la partie fixe du véhicule s'étend angulairement sur 240°.

## Patentansprüche

1. Aufbau eines Brems-Servomotors (1), der aus einer vorderen Halbschale (6) und einer hinteren Halbschale (8) zusammengesetzt ist und an einem festen Teil (4, 40) eines Fahrzeugs mittels Klauen (54, 56, 154) angebracht ist, die in einer zur Mittelachse des Servomotors senkrechten Ebene und um diese Achse angeordnet sind, sich in radialer Richtung nach außen erstrecken und für die Montage mittels axialem Eingriff und nachfolgender Drehung mit Paßflächen (34, 36, 134) von entsprechenden Formen oder Abmessungen zusammenwirken, wobei zwischen dem Servomotor (1) und dem festen Teil (4, 40) ein elastisches Mittel (25, 125) angeordnet ist und wobei der Servomotor (1) an der hinteren Halbschale (8) eine Mittelnabe (24) aufweist, die ein Steuerventilmittel (26) des Servomotors (1) enthält, dadurch gekennzeichnet, daß die Klauen (154) oder die Paßflächen (34, 36) einteilig mit der Mittelnabe (24) ausgebildet sind und mit den Paßflächen (134) bzw. mit den am festen Teil (4, 40) des Fahrzeugs ausgebildeten Klauen (54, 56) zusammenwirken.

2. Servomotoraufbau gemäß Anspruch 1, dadurch gekennzeichnet, daß der feste Teil des Fahrzeugs von der Stirnwand, die den Motorraum von der Fahrgastzelle trennt, gebildet wird.

3. Servomotoraufbau gemäß Anspruch 1, dadurch gekennzeichnet, daß der feste Teil des Fahrzeugs von einem Zwischenstück (40) gebildet wird, das selbst an der Stirnwand, die den Motorraum von der Fahrgastzelle trennt, befestigt ist.

4. Servomotoraufbau gemäß einem der Ansprüche 1 bis 3, dadurch gekennzeichnet, daß die Paßflächen von in wenigstens zwei Stufen versetzten Paßflächen (34, 36) gebildet werden.

5. Servomotoraufbau gemäß einem der Ansprüche 1 bis 3, dadurch gekennzeichnet, daß die Klauen von in wenigstens zwei Stufen versetzten Teilen (54, 56) gebildet werden.

6. Servomotoraufbau gemäß einem der Ansprüche 4 oder 5, dadurch gekennzeichnet, daß die Paßflächen (34, 36, 134) und die Klauen (54, 56, 154) von versetzten Stufen gebildet werden, wobei sich jede Stufe über einen Winkelsektor von 30° erstreckt.

7. Servomotoraufbau gemäß einem der Ansprüche 1 bis 6, dadurch gekennzeichnet, daß er mit dem festen Teil des Fahrzeugs über eine Fläche in Kontakt ist, die sich winkelmäßig über mehr als 180° erstreckt.

8. Servomotoraufbau gemäß Anspruch 7, dadurch gekennzeichnet, daß sich die Kontaktfläche zwischen dem Servomotor und dem festen Teil des Fahrzeugs winkelmäßig über 240° erstreckt.

**Claims**

1. Brake servomotor assembly (1) consisting of a front half-shell (6) and a rear half-shell (8) and mounted on a stationary part (4, 40) of a vehicle by means of lugs (54, 56, 154) arranged in a plane perpendicular to the axis of the servomotor and around this axis, extending radially outwards and cooperating with bearing surfaces (34, 36, 134) with corresponding shapes and dimensions for mounting by means of axial engagement followed by rotation, an elastic means (25, 125) being arranged between the servomotor (1) and the stationary part (4, 40), the servomotor (1) having a central hub (24) on the rear half-shell (8) comprising a control valve means (26) of the servomotor (1), characterized in that the lugs (154) or the bearing surfaces (34, 36) are formed as a single piece with the central hub (24) and cooperate respectively with the bearing surfaces (134) or the lugs (54, 56) formed on the stationary part (4, 40) of the vehicle.

2. Servomotor assembly according to Claim 1, characterized in that the stationary part of the vehicle is the apron separating the engine compartment from the passenger compartment.

3. Servomotor assembly according to Claim 1, characterized in that the stationary part of the vehicle consists of an intermediate piece (40) itself fixed onto the apron separating the engine compartment from the passenger compartment.

4. Servomotor assembly according to one of Claims 1 to 3, characterized in that the bearing surfaces consist of bearing surfaces offset (34, 36) in at least two tiers.

5. Servomotor assembly according to one of Claims 1 to 3, characterized in that the lugs consist of offset (54, 56) in at least two tiers.

6. Servomotor assembly according to either of Claims 4 or 5, characterized in that the bearing surfaces (34, 36, 134) and the lugs (54, 56, 154) consist of offset tiers, each tier extending over an angular segment of 30°.

7. Servomotor assembly according to one of Claims 1 to 6, characterized in that it is in contact with the stationary part of the vehicle over an area which extends angularly through more than 180°.

8. Servomotor assembly according to Claim 7, characterized in that the area of contact between the servomotor and the stationary part of the vehicle extends angularly through 240°.

Fig 1

Fig 2

Fig 3

Fig 4

Fig 5

Fig 6

Fig 7

Fig 8